# DEMANDE DE BREVET EUROPEEN

(11) **EP 3 428 656 A1**
(43) Date de publication de la demande: **16.01.2019**
(21) Numéro de dépôt: 17181254.8
(22) Date de dépôt: 13.07.2017
(51) Int. Cl.: G01P 5/02, G01F 1/28

(54) **DISPOSITIF DE MESURE DE LA VITESSE DE DÉPLACEMENT D'UN FLUIDE**

(71) Demandeur: Carrard, Jean-Daniel, 1400 Yverdon-les-Bains (CH)
(72) Inventeur: Carrard, Jean-Daniel, 1400 Yverdon-les-Bains (CH)
(74) Mandataire: Wenger, Joel-Théophile

(57) **Abrégé**

La présente invention concerne un dispositif de mesure de la vitesse de déplacement d'un fluide. Ce dispositif comporte un équipage mobile (11) partiellement en contact avec un flux de fluide dont on souhaite mesurer la vitesse de déplacement, cet équipage mobile (11) étant déplacé par rapport à une position de repos par un flux dudit fluide, l'amplitude du déplacement de l'équipage mobile dépendant de la vitesse de déplacement du fluide. Ledit dispositif comporte en outre des moyens (17) pour déterminer l'amplitude du déplacement de l'équipage mobile par rapport à ladite position de repos. Ce dispositif est caractérisé en ce que l'équipage mobile (11) comporte une tige de trainée (15) pivotant autour d'une zone de pivotement, en ce que ladite tige de trainée (15) est en contact avec ledit fluide en mouvement et une partie l'équipage mobile (11) est protégée du fluide en mouvement, et en ce que ledit dispositif (10) comporte en outre des moyens de stabilisation (14) du déplacement de l'équipage mobile (11).

## Description

### DOMAINE TECHNIQUE

Dispositif de mesure de la vitesse de déplacement d'un fluide, ce dispositif comportant un équipage mobile partiellement en contact avec un flux de fluide dont on souhaite mesurer la vitesse de déplacement, cet équipage mobile étant déplacé par rapport à une position de repos par un flux dudit fluide, l'amplitude du déplacement de l'équipage mobile dépendant de la vitesse de déplacement du fluide, ledit dispositif comportant en outre des moyens pour déterminer l'amplitude du déplacement de l'équipage mobile par rapport à ladite position de repos.

Ce dispositif de mesure peut notamment être utilisé comme anémomètre pour mesurer la vitesse du vent et éventuellement sa direction. Il peut aussi être utilisé pour mesurer des vitesses de déplacement d'autres fluides.

### TECHNIQUE ANTERIEURE

Il existe actuellement de nombreux dispositifs permettant de mesure la vitesse de déplacement d'un fluide. Parmi ceux-ci, on trouve notamment des anémomètres en charge de mesurer la vitesse du vent. De nombreux modèles différents ont été utilisés comme notamment les anémomètres à coupelle, les anémomètres à moulin, les anémomètres à trainée pour n'en citer que quelque uns.

En ce qui concerne les anémomètres à trainée, le principe général de fonctionnement est le suivant : un objet relativement léger est suspendu à un support de telle façon que cet objet ait une position de repos déterminée en l'absence de vent ou d'un autre fluide en mouvement. En présence de vent ou d'un fluide en mouvement, l'objet quitte sa position de repos pour prendre une position qui dépend de la vitesse et éventuellement de la direction du déplacement du fluide qui agit sur cet objet. La détermination de la position de l'objet permet de déterminer la vitesse de déplacement du fluide.

Dans les cas où l'objet est mobile uniquement dans un plan, l'anémomètre est souvent monté sur une girouette de façon à s'orienter dans la direction du flux de fluide.

En pratique, ce genre de dispositifs est assez peu efficace et peu fiable. Dans le cas où le dispositif est monté sur une girouette, il est nécessaire que le fluide applique une force plus grande que les forces de frottement pour positionner la girouette de façon correcte. Il en résulte qu'il n'est pas possible de mesurer de faibles vitesses de déplacement.

Le déplacement de l'objet mobile suit souvent un mouvement erratique dû aux turbulences. A cause de ceci, d'une part, il est extrêmement difficile de mesurer une valeur de déplacement et d'autre part, rien ne garantit que la valeur mesurée corresponde à une valeur de vitesse de déplacement moyenne.

Il en résulte que l'anémomètre à trainée n'est pas souvent utilisé en pratique pour mesurer la vitesse de déplacement de fluides tels que par exemple la vitesse du vent et n'est pas utilisé lorsque les mesures doivent avoir un minimum de fiabilité et de précision.

### EXPOSE DE L'INVENTION

La présente invention se propose de résoudre les problèmes des dispositifs mentionnés ci-dessus, en réalisant un dispositif de mesure de la vitesse de déplacement d'un fluide qui soit utilisable dans la pratique, fiable et précis sur une grande plage de valeurs de mesure.

Le but de l'invention est atteint par un dispositif tel que défini en préambule et caractérisé en ce que :
- l'équipage mobile comporte une tige de trainée pivotant autour d'une zone de pivotement,
- ladite tige de trainée est en contact avec ledit fluide en mouvement et une partie l'équipage mobile est protégée du fluide en mouvement, et
- ledit dispositif comporte en outre des moyens de stabilisation du déplacement de l'équipage mobile.

L'équipage mobile peut se déplacer non pas uniquement dans un plan, mais dans un cône de révolution, ce qui permet également la mesure de la direction de déplacement du fluide. Il n'est donc pas nécessaire de vaincre d'abord une force de frottement avant que le dispositif puisse être utilisé. Il n'y a pas d'effet d'hystérésis. Cette caractéristique permet de mesurer des vitesses de déplacement très faibles et ceci, dans n'importe quelle direction.

Le déplacement de l'équipage mobile par rapport à sa position de repos pour une vitesse de déplacement du fluide donnée est le même, quelle que soit la direction de déplacement de ce fluide. Ceci permet une bonne fiabilité et une bonne reproductibilité des mesures.

Le dispositif comporte des moyens de stabilisation du déplacement de l'équipage mobile. Ces moyens de stabilisation ont pour effet d'éviter que cet équipage mobile suive un mouvement erratique. Ceci permet une lecture facilitée de la position de l'équipage mobile et donc une mesure plus précise, plus fiable et plus reproductible. Il est à noter que ces moyens de stabilisation n'introduisent pas du tout de frottements à vaincre au démarrage.

Le dispositif selon l'invention répond à deux contraintes contradictoires qui sont d'une part l'absence de forces de type frottements à vaincre avant de pouvoir effectuer une mesure et d'autre part, l'application de forces de stabilisation du mouvement de l'équipage mobile, sans pour autant fausser les mesures.

Ces différentes caractéristiques permettent de mesurer des vitesses de déplacement de fluide sur une grande plage de valeurs, de moins d'un centimètre par seconde à plusieurs dizaines de kilomètres par heure, tout en conservant une bonne précision sur toute la plage de mesure.

Le dispositif de l'invention peut être équipé de moyens pour transmettre les mesures à distance à un utilisateur. Dans ce cas, le dispositif consomme peu d'énergie et peut donc être alimenté par une source d'énergie provenant de l'environnement. Typiquement, si le dispositif est utilisé en extérieur comme anémomètre, il peut être alimenté en énergie par une cellule photovoltaïque.

Le dispositif de l'invention permet de choisir l'équilibrage de l'équipage mobile. Ceci permet de choisir la sensibilité de la mesure. Par ailleurs, cet équipage mobile étant fixé en un point proche du centre de gravité, il est relativement peu influencé par les chocs et les vibrations. Il peut donc être placé dans un environnement dans lequel il risque de subir des chocs, tout en y résistant et tout en restant en mesure de fournir des résultats fiables.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue de profil d'un mode de réalisation du dispositif de l'invention ;
- la figure 2 est une vue en coupe d'une partie du dispositif de la figure 1 ;

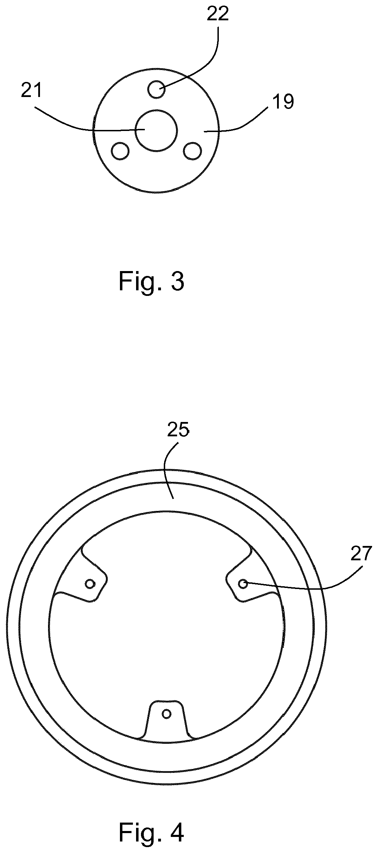

- la figure 3 est une vue de dessus d'un élément de l'invention ;
- la figure 4 est une vue de dessus d'une partie du dispositif représenté par la figure 1 ; et
- la figure 5 est une vue de profil, d'une variante du dispositif de l'invention.

### MANIERES DE REALISER L'INVENTION

En référence aux figures, le dispositif 10 de l'invention est destiné à mesurer notamment la vitesse de déplacement d'un fluide. Ce dispositif peut également être utilisé pour mesurer la direction du déplacement du fluide. Le fluide peut être de l'air et le dispositif peut donc être utilisé comme anémomètre. Ce fluide peut également être un gaz ou un mélange de gaz différent de l'air ou un liquide.

Ce dispositif 10 comprend notamment un équipage mobile 11 placé sur un support 12 et un capteur 13 agencé pour déterminer la position de cet équipage mobile 11. Il comprend en outre des moyens 14 de stabilisation du mouvement de l'équipage mobile.

L'équipage mobile 11 est formé d'une tige de trainée 15 au moins partiellement en contact avec ledit fluide en mouvement et d'une tige d'équilibrage 16 protégée du fluide en mouvement. La tige de trainée 15 et la tige d'équilibrage 16 sont en principe alignées l'une avec l'autre et solidaire l'une de l'autre. La tige de trainée 15 peut se déplacer dans un cône de révolution. L'équipage mobile 11 est associé à des moyens 17 pour déterminer l'amplitude du déplacement de la tige de trainée 15 par rapport à une position de repos.

De façon plus détaillée, la tige de trainée 15 et la tige d'équilibrage 16 sont reliées entre elles par un ensemble de liaison 18. Cet ensemble de liaison comporte deux pièces de liaison 19 et des goupilles de liaison 20. Dans le mode de réalisation illustré, chaque pièce de liaison 19 est cylindrique à base circulaire et comporte un alésage central 21 dans lequel est fixée soit la tige de trainée 15 soit la tige d'équilibrage 16. La tige considérée peut être fixée et maintenue dans l'alésage central du fait des dimensions respectives de l'alésage et de tige. Cette tige pourrait également être collée dans l'alésage ou maintenue au moyen d'une vis de fixation par exemple.

Chaque pièce de liaison 19 comporte une pluralité des trous 22, par exemple trois, disposés sur un cercle concentrique à la base de cette pièce de liaison. Ces trous sont agencés pour recevoir les goupilles de liaison 20.

La pièce de liaison 19 qui reçoit la tige de trainée 15 comporte un trou central 23 de faible diamètre concentrique à l'alésage central 21 dans lequel est disposée la tige de trainée. Des fils de suspension 24 sont introduits dans ce trou central 23, puis y sont fixés. La fixation peut se faire par collage, par sertissage ou par tout autre moyen adéquat. Dans l'exemple représenté, trois fils 24 sont utilisés.

Ces fils de suspension 24 sont fixés de manière à maintenir l'équipage mobile 11 en position tout en lui permettant de pivoter autour d'un point de pivotement. A cet effet, les fils 24 passent entre les goupilles de liaison 20 et sont fixés à une bague 25, comme cela est décrit plus bas.

Selon un mode de réalisation avantageux, les trous 22 des pièces de liaison 19 sont plus longs que le minimum nécessaire pour recevoir les goupilles 20 correspondantes. Ceci permet de faire coulisser l'ensemble pièce de liaison - tige sur les goupilles et donc de déplacer la position respective du point de fixation des fils 24 par rapport au centre de gravité de l'équipage mobile 11. Cette possibilité d'ajuster ces positions respectives permet de modifier l'équilibrage de l'équipage mobile et donc, sa sensibilité.

En effet, plus le point de fixation des fils 24 est proche du centre de gravité, moins la force nécessaire pour faire pivoter la tige de trainée 15 d'un angle déterminé sera grande. Il faut toutefois que le centre de gravité soit en dessous du point de fixation, faute de quoi l'équipage mobile 11 se trouverait dans une position d'équilibre instable ou en déséquilibre.

Selon une variante, le réglage de la sensibilité pourrait être fait en changeant la tige d'équilibrage 16 et/ou la tige de trainée 15. Il est également possible d'agir sur la sensibilité en modifiant la forme de la tige de trainée 15. Une moins grande sensibilité est obtenue par exemple avec une tige de faible diamètre et de masse plus élevée. Il est au contraire possible d'augmenter la sensibilité en augmentant la « prise au vent » de la tige de trainée 15. Ceci peut par exemple se faire en ajoutant à l'extrémité libre de la tige, une sphère réalisée en un matériau léger.

Selon une autre variante, le réglage de la sensibilité peut se faire de façon dynamique. Dans ce mode de réalisation, la sensibilité peut être réglée en fonction de la vitesse de déplacement du fluide, en modifiant la position du point de fixation et/ou du centre de gravité. La position du point de fixation peut être modifiée par exemple en fixant les fils 24 à un organe coulissant lié à un actionneur. La position du centre de gravité peut être modifiée par exemple en disposant une masse sur les goupilles 20, cette masse pouvant être déplacée par un actionneur.

Dans ce mode de réalisation, il est possible de prévoir une grande sensibilité pour des vitesses de fluide faibles. Si la sensibilité est très grande et qu'elle reste constante sur toute la plage de mesure, il est possible que la tige de trainée butte contre une paroi du support 12. La sensibilité peut être modifiée dynamiquement de façon à ce qu'elle soit plus faible pour des grandes vitesses de déplacement du fluide, de sorte que la tige de trainée 15 ne butte pas contre le support 12.

Un avantage du fait que l'équipage mobile soit proche de l'équilibre autour de son point de fixation est le fait que des vibrations ou des chocs agissent de façon quasiment identique sur la partie supérieure et sur la partie inférieure de cet équipage mobile 11. Il en résulte que cet équipage mobile est relativement peu sensible aux chocs et aux vibrations et que le dispositif peut donc être placé et utilisé dans un endroit dans lequel il peut être soumis à ce type de perturbations.

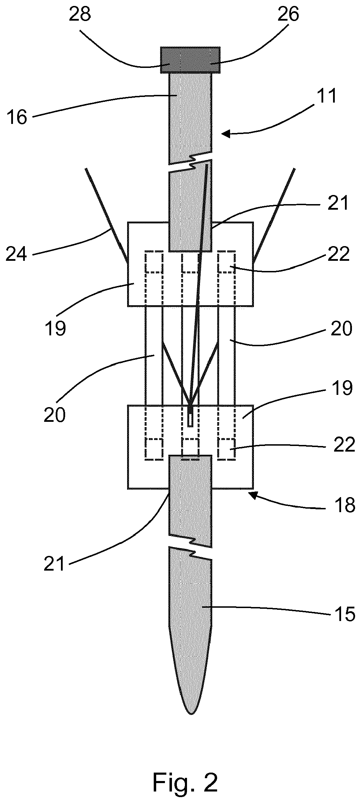

Comme cela est visible sur la figure 2, la partie supérieure de l'équipage mobile 11 comporte un aimant 26 dont les fonctions sont explicitées plus bas.

Le support 12 est agencé pour recevoir l'équipage mobile 11 et pour protéger la tige d'équilibrage 16 du fluide en mouvement. A cet effet, le support 12 a avantageusement une forme tronconique ayant une ouverture inférieure par laquelle débouche la tige de trainée 15.

Le support 12 reçoit la bague 25 à laquelle sont fixés les fils de suspension 24, cette bague étant pourvue d'éléments de fixation 27. Ces éléments de fixation sont utilisés pour fixer les fils 24 au support 12. Ils peuvent être formés de goupilles et/ou de trous notamment.

Comme mentionné précédemment, le dispositif de l'invention comporte des moyens 17 pour déterminer l'amplitude du déplacement de l'équipage mobile par rapport à sa position de repos. Selon un mode de réalisation avantageux, ces moyens de détermination de l'amplitude du déplacement utilisent l'aimant 26 disposé à l'extrémité de la tige d'équilibrage 16, ainsi que le capteur 13, qui et avantageusement un capteur a effet Hall. Ce capteur 13 permet de déterminer la position de l'aimant 26 et donc l'angle de l'équipage mobile 11 par rapport à la verticale ainsi que sa direction par rapport à une référence. Ces éléments seront utilisés pour déterminer la vitesse de déplacement du fluide ainsi que sa direction.

Comme également mentionné précédemment, le dispositif de l'invention comporte des moyens 14 de stabilisation du mouvement de l'équipage mobile. Ces moyens de stabilisation 14 comportent un aimant 28 qui peut avantageusement, mais pas obligatoirement être le même que l'aimant 26 qui est utilisé pour déterminer la position de l'équipage mobile 11. Ces moyens de stabilisation 14 comportent également un dôme 29 réalisé en un matériau conducteur électrique tel que du cuivre ou de l'aluminium notamment. Ce dôme 29 s'étend sur une surface qui couvre de préférence toutes les positions possibles de l'équipage mobile ou du moins une grande partie d'entre elles.

Ce dôme a une surface intérieure non plane. Selon un mode de réalisation avantageux, la surface intérieure est une calotte sphérique centrée sur le point autour duquel l'équipage mobile 11 peut pivoter. De cette manière, la distance entre l'aimant 28 et la surface intérieure du dôme 29 reste constante. Il est toutefois également possible de réaliser un dôme 29 de telle manière que la distance entre l'aimant 28 et la surface intérieure du dôme ne soit pas constante. Dans ce cas, la distance entre l'aimant 28 et cette surface intérieure sera généralement toutefois constante sur un cercle centré sur le centre du dôme.

L'intérêt d'utiliser un aimant placé à l'extrémité de la tige d'équilibrage 16 et à proximité du dôme 29, combiné avec le fait que ce dôme 29 est réalisé en une matière conductrice électrique vient du fait que cet ensemble forme un frein à courant de Foucault. Dans ce type de freins, le déplacement de l'élément mobile est d'autant plus contrecarré par le frein que la distance entre l'aimant et la partie conductrice est faible et que le mouvement est rapide. Il en résulte que si le mouvement est très lent, le frein n'aura pratiquement aucun effet. Si au contraire, le mouvement est rapide, le frein aura un effet important.

Dans le cas du dispositif de l'invention, si l'écoulement du fluide est laminaire, l'équipage mobile 11 subira une déviation par rapport à sa position de repos et restera sensiblement immobile dans la position atteinte. Le frein à courant de Foucault n'aura aucun effet et la détermination de la déviation de la position de l'équipage mobile par rapport à la position de repos sera relativement simple. Dans le cas où le fluide subit un écoulement turbulent, le frein à courant de Foucault agira d'autant plus efficacement que les turbulences sont importantes. Ceci aura pour effet de stabiliser le déplacement de l'équipage mobile 11 et de rendre possible la détermination de sa position.

De cette façon, les moyens de stabilisation 14 du mouvement n'interfèrent pas avec la mesure absolue de la vitesse de déplacement du fluide, mais agissent uniquement pour diminuer le caractère erratique des déplacements de l'équipage mobile. Le dispositif de l'invention peut donc être utilisé dans des conditions dans lesquelles la vitesse du fluide est très faible et sur une plage de vitesses très grandes, aussi bien avec des fluides ayant un écoulement laminaire que dans des conditions d'écoulement turbulent.

Dans le mode de réalisation illustré, le support 12 est maintenu sur une armature 30 qui joue également le rôle de protection pour la tige de trainée 15. Cette armature peut par ailleurs être utilisée pour fixer le dispositif à un pied tel que par exemple un pied de lampadaire.

Le capteur 13 de déviation de l'équipage mobile peut également être fixé à l'armature.

Le dispositif de l'invention peut en outre comporter un circuit électronique 31 de traitement des informations reçues par le capteur 13. Ce circuit électronique est avantageusement associé à une mémoire 32 et à des moyens de communication 33. Le circuit électronique 31 reçoit de la part du capteur 13, des informations de la position de l'aimant 26. Cette information de position est traitée dans le circuit de traitement 31 pour en déduire l'amplitude du déplacement de l'équipage mobile 11 par rapport à la position de repos. Cette amplitude est à son tour utilisée pour en déduire la vitesse du fluide, sur la base du fait que l'amplitude du déplacement de l'équipage mobile par rapport à sa position de repos est proportionnelle à la vitesse de déplacement du fluide. Si cette information est souhaitée, la direction de déplacement du fluide peut également être déterminée à partir de la position de l'aimant 26, déterminée par le capteur 13.

Il est à noter que la relation entre l'amplitude du déplacement de l'équipage mobile 11 et la vitesse du fluide dépend notamment de la sensibilité du dispositif et donc de différents paramètres tels que la distance entre le centre de gravité et le point de fixation de l'équipage mobile, la forme de la tige de trainée, etc. Un calibrage peut être utilisé pour déterminer cette relation entre déplacement et vitesse. La relation entre le déplacement et la vitesse peut égalent dépendre d'autres paramètres tels qu'en particulier la pression. Pour tenir compte de ceci, un capteur de pression (non représenté) peut être intégré au dispositif de l'invention. Ce capteur de pression peut être connecté au circuit électronique 31 de façon à permettre à ce dernier de tenir compte des données relatives à la pression lors du calcul de la vitesse du fluide

Selon l'implémentation souhaitée, différents modes de réalisation sont envisageables en ce qui concerne l'utilisation des données mesurées par le dispositif. Le résultat des mesures peut par exemple être envoyé à intervalles réguliers par l'intermédiaire des moyens de communication 33, à un centre tel qu'un centre météorologique. Les résultats peuvent également être mémorisés localement dans la mémoire 32 du dispositif de l'invention. Ces mesures peuvent être envoyées en bloc, au centre, en utilisant les moyens de communication 33. Ces moyens de communication pourraient typiquement utiliser un protocole de communication tel que celui connu sous le nom LoRa qui a l'avantage de ne consommer que peut d'énergie.

Il est également possible que le dispositif de l'invention ne comprenne pas de moyens de traitement. Dans ce cas, la position de l'équipage mobile telle que mesurée par le capteur 13 est transmise au centre. Cette information est ensuite traitée dans le centre pour en extraire les informations souhaitées concernant la vitesse et éventuellement la direction de déplacement du fluide.

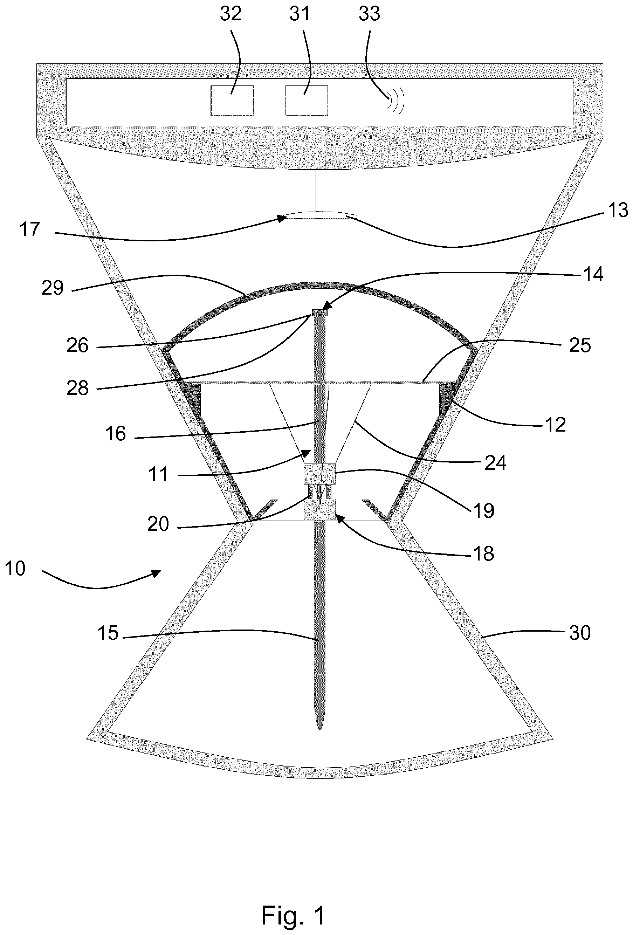

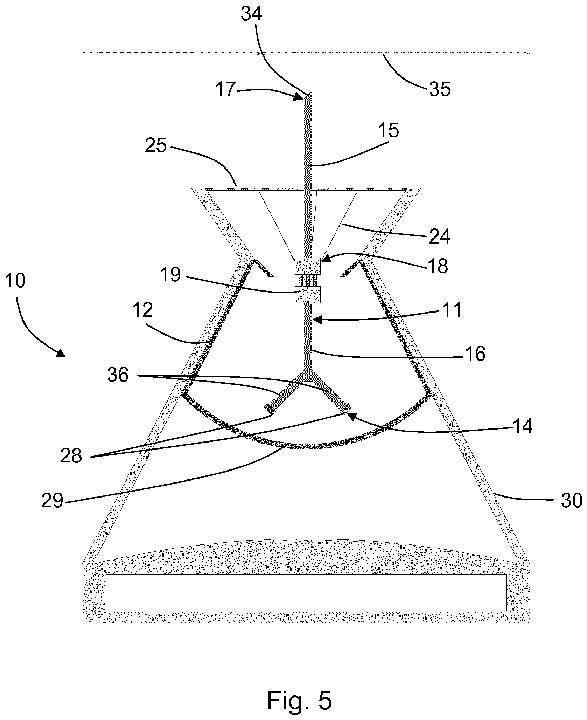

La présente invention est illustrée par la figure 1 dans un mode de réalisation particulier dans lequel la tige de trainée 15, en contact avec le flux de fluide, est en dessous de la tige d'équilibrage 16, protégée du flux de fluide. Il est envisageable de changer la position de ces éléments et de placer la tige de trainée 15 vers le haut. Ce mode de réalisation est illustré par la figure 5. Dans ce cas, les positions relatives de la zone de pivotement et du centre de gravité de l'équipage mobile doivent être telles que cet équipage mobile 11 soit dans un équilibre stable.

L'équipage mobile 11 est fixé par des fils 24 à une bague 25 et la tige d'équilibrage 16 est protégée du fluide en mouvement par un support 12. La détermination du déplacement de la tige de trainée 15 par rapport à la position de repos peut être faite comme dans le mode de réalisation précédent par un capteur 13 à effet Hall.

Dans le mode de réalisation de la figure 5, un autre moyen peut également être utilisé dans ce but. La tige de trainée 15 comporte une extrémité réfléchissante formant un miroir 34. Un faisceau lumineux peut être dirigé vers ce miroir 34. La partie du faisceau lumineux qui atteint le miroir est réfléchie dans une direction qui dépend de la position de la tige de trainée 15. Ce faisceau réfléchi peut être projeté sur un écran 35. Une graduation appropriée permet de lire la vitesse du fluide en fonction de la position du faisceau réfléchi sur cet écran.

En ce qui concerne les moyens de stabilisation 14 du déplacement de l'équipage mobile 11, le dispositif de la figure 5 comporte une tige d'équilibrage 16 ayant deux extrémités 36, chaque extrémité étant pourvue d'un aimant 28. Ces aimants coopèrent avec le dôme 29 pour agir comme un frein à courant de Foucault.

En fonction du mode de réalisation, les moyens de stabilisation 14 peuvent être disposés vers le haut ou vers le bas du dispositif. Les moyens de stabilisation 14 et les moyens 17 pour déterminer le déplacement de l'équipage mobile peuvent être totalement dissociés ou au contraire, utiliser des composants communs.

Les moyens 17 pour déterminer le déplacement de l'équipage mobile ont été décrits comme comprenant un capteur à effet Hall utilisant un aimant 26 disposé à une extrémité de l'équipage mobile ou un élément optique externe. D'autres moyens pourraient être utilisés pour déterminer la position de l'équipage mobile. Ces moyens pourraient par exemple utiliser un élément optique interne à l'une des tiges, une caméra ou tout autre moyen approprié.

Il est clair que certains éléments décrits en référence au mode de réalisation de la figure 5 pourraient être utilisés en lieu et place des éléments équivalents décrits en référence à la figure 1 et inversément.

Dans les modes de réalisation illustré, l'équipage mobile est décrit comme étant fixé au moyen de fils de suspension. Cet équipage mobile pourrait toutefois être fixé de manière différente, par exemple au moyen d'un cardan ou d'une tige solidaire d'un élément fixe du dispositif.

## Revendications

1. Dispositif de mesure de la vitesse de déplacement d'un fluide, ce dispositif comportant un équipage mobile (11) partiellement en contact avec un flux de fluide dont on souhaite mesurer la vitesse de déplacement, cet équipage mobile (11) étant déplacé par rapport à une position de repos par un flux dudit fluide, l'amplitude du déplacement de l'équipage mobile dépendant de la vitesse de déplacement du fluide, ledit dispositif comportant en outre des moyens (17) pour déterminer l'amplitude du déplacement de l'équipage mobile par rapport à ladite position de repos, **caractérisé en ce que :**
• l'équipage mobile (11) comporte une tige de trainée (15) pivotant autour d'une zone de pivotement,
• ladite tige de trainée (15) est en contact avec ledit fluide en mouvement et une partie l'équipage mobile (11) est protégée du fluide en mouvement, et
• ledit dispositif (10) comporte en outre des moyens de stabilisation (14) du déplacement de l'équipage mobile (11).

2. Dispositif selon la revendication 1, **caractérisé en ce que** les moyens de stabilisation (14) du déplacement de l'équipage mobile comportent un dôme (29) réalisé en un matériau conducteur électrique et un aimant (28) solidaire dudit équipage mobile, ce dôme (29) ayant une surface et des dimensions telles qu'une partie du dôme (29) se trouve en regard de l'aimant (28) quelle que soit la position de l'équipage mobile (11).

3. Dispositif selon la revendication 1, **caractérisé en ce que** la zone de pivotement de l'équipage mobile (11). est disposée à proximité du centre de gravité de cet équipage mobile (11), au-dessus de ce centre de gravité.

4. Dispositif selon la revendication 1, **caractérisé en ce que** l'équipage mobile (11) est fixé à un support (12) par l'intermédiaire de fils de suspension (24).

5. Dispositif selon la revendication 4, **caractérisé en ce que** le support (12) a une forme tronconique, la partie de l'équipage mobile (11) protégée du fluide en mouvement se déplaçant à l'intérieur de ce support (12).

6. Dispositif selon les revendications 2, 4 ou 5, **caractérisé en ce que** le dôme (29) ferme le support (12).

7. Dispositif selon la revendication 2, **caractérisé en ce que** la distance entre l'aimant (28) des moyens (14) de stabilisation du mouvement de l'équipage mobile et la surface intérieure du dôme (29) est constante quelle que soit la position de l'équipage mobile (11).

8. Dispositif selon la revendication 2, **caractérisé en ce que** la distance entre l'aimant (28) des moyens (14) de stabilisation du mouvement de l'équipage mobile et la surface intérieure du dôme (29) varie en fonction de l'éloignement de l'équipage mobile (11) par rapport à sa position de repos.

9. Dispositif selon la revendication 1, **caractérisé en ce que** les moyens (17) pour déterminer l'amplitude de déplacement de l'équipage mobile (11) par rapport à la position de repos comportent un aimant (26) solidaire de ladite tige d'équilibrage (16) et un capteur (13) de position dudit aimant (26).

10. Dispositif selon les revendications 2 et 9, **caractérisé en ce que** l'aimant (26) faisant partie des moyens (17) pour déterminer l'amplitude du déplacement de l'équipage mobile (11) par rapport à ladite position de repos et l'aimant (28) faisant partie des moyens (14) de stabilisation du déplacement de l'équipage mobile (11) sont le même aimant.

11. Dispositif selon la revendication 1, **caractérisé en ce qu'**il comporte un circuit électronique (31) de traitement agencé pour convertir une mesure de la déviation de l'équipage mobile (11) par rapport à sa position de repos en une vitesse de déplacement du fluide.

12. Dispositif selon la revendication 1, **caractérisé en ce que** l'équipage mobile (11) est en position verticale dans sa position de repos et la tige de trainée (15) est une partie intérieure de cet équipage mobile (11).

13. Dispositif selon la revendication 1, **caractérisé en ce que** l'équipage mobile (11) est en position verticale dans sa position de repos et la tige de trainée (15) est une partie supérieure de cet équipage mobile (11).

14. Dispositif selon la revendication 9, **caractérisé en ce que** le capteur de position (13) dudit aimant (26) des moyens (17) pour déterminer l'amplitude du mouvement est agencé pour déterminer également la direction de déplacement du fluide.

15. Dispositif selon la revendication 11, **caractérisé en ce que** le circuit électronique (31) de traitement est associé à des moyens de communication (33) agencés pour transmettre des informations mesurées par ledit dispositif à un récepteur externe.
